Europäisches Patentamt

European Patent Office

Office européen des brevets

(11) Numéro de publication: **0 452 180 B1**

## (12) FASCICULE DE BREVET EUROPEEN

(45) Date de publication du fascicule du brevet: **30.08.95**  (51) Int. Cl.$^6$: **C03C 23/00**

(21) Numéro de dépôt: **91400823.0**

(22) Date de dépôt: **27.03.91**

(54) **Procédé pour la désionisation superficielle d'un ruban de verre, dispositif pour sa mise en oeuvre et produits désionisés obtenus.**

(30) Priorité: **06.04.90 FR 9004416**

(43) Date de publication de la demande:
**16.10.91 Bulletin 91/42**

(45) Mention de la délivrance du brevet:
**30.08.95 Bulletin 95/35**

(84) Etats contractants désignés:
**BE CH DE ES FR GB IT LI LU SE**

(56) Documents cités:
**EP-A- 0 001 837**
**FR-A- 2 616 144**

(73) Titulaire: **SAINT-GOBAIN VITRAGE**
**"Les Miroirs",**
**18 Avenue d'Alsace**
**F-92400 Courbevoie (FR)**

(72) Inventeur: **Beghin, Benoît**
**Appart. 422,**
**4, rue des Gallois**
**F-31400 Toulouse (FR)**
Inventeur: **Peraud, Jean-Claude**
**18, rue Pasteur**
**F-77380 Combs-la-Ville (FR)**

(74) Mandataire: **Le Vaguerèse, Sylvain Jacques**
**et al**
**SAINT-GOBAIN RECHERCHE**
**39, quai Lucien Lefranc**
**F-93300 Aubervilliers Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

L'invention est relative aux techniques de désionisation superficielle du verre plat par déplacement des ions sous l'effet d'un champ électrique et, notamment, à la désalcalinisation des verres sodocalciques. Dans la présente description, on entendra, par désionisation, l'élimination des ions alcalins et éventuellement, alcalino-terreux.

Les traitements de désalcalinisation sont entrepris de façon traditionnelle pour modifier la résistance chimique, améliorer l'adhérence de dépôts superficiels ou modifier certains caractères optiques du verre.

La désionisation envisagée le plus fréquemment est de type chimique. L'objet en verre est soumis à une solution ou une atmosphère réagissant avec les ions alcalins du verre. Pour faciliter la réaction, l'opération se déroule à une température supérieure à la température ambiante.

Il est apparu plus récemment des techniques dans lesquelles la désionisation superficielle est conduite par migration d'ions sous l'effet d'un champ électrique.

Dans son principe, le phénomène est le suivant : le verre, dont la température est contrôlée, est disposé entre deux electrodes. L'application du champ électrique met en mouvement les ions les plus facilement déplaçables et, en particulier, les ions alcalins. Sous l'effet d'un champ continu, les ions alcalins sont déplacés d'une surface vers la surface opposée du verre où se trouve la cathode et forment sur cette surface et au contact de l'atmosphère une pellicule de carbonate de sodium. Sur la face proche de l'anode, l'oxygène et/ou l'hydrogène diffuse (nt).

Une difficulté importante au plan pratique est d'obtenir un traitement homogène de la surface du verre.

Pour obtenir un traitement homogène de la surface de verre, il a été envisagé, comme le décrit le brevet des US-A 3 879 183, d'appliquer au verre un champ électrique établi entre deux electrodes, en présence d'un gaz plasmagène, pour engendrer une décharge couronne qui crée une liaison électrique avec le verre. L'anode et la cathode sont placées de chaque côté du verre et la décharge couronne est utilisée comme électrode, dite electrode gazeuse, pour appliquer le champ electrique. La distance entre les électrodes et la surface de verre est un facteur important dont dépend la tension appliquée. Le procédé décrit dans ce brevet concerne le traitement de plaques de verre immobiles, placées entre les électrodes dans une enceinte sous vide où à la pression atmosphérique et les tensions appliquées sont relativement élevées, de l'ordre de plusieurs milliers de volts.

Comme les plaques de verre sont de faible dimension et sont immobiles pendant le traitement, la distance entre les électrodes et la surface du verre peut être réglée d'une manière précise.

Le problème du traitement de la surface de verre existe particulièrement lorsque le verre se présente sous la forme d'un ruban de verre en défilement ; en effet, dans ce cas, on doit tenir compte notamment de la vitesse de déplacement du ruban de verre et la distance entre la surface du verre et de l'électrode, distance qui peut varier à tout moment.

La demande de brevet EP-A-237 431 propose un procédé de désionisation superficielle d'un tel ruban de verre en déplacement.

Le procédé décrit dans ce brevet consiste à faire défiler le ruban de verre chauffé entre deux électrodes rectilignes identiques, ou bien sous les deux électrodes situées du même côté du ruban, et à traiter une ou les deux faces du ruban de verre par une décharge couronne établie au moyen d'un courant continu régulé en intensité.

Comme indiqué dans ce brevet, le fait de contrôler l'intensité du courant circulant entre les électrodes permet de faire face à toute irrégularité dans le positionnement relatif du ruban de verre et des électrodes. Dans ce cas, la tension s'ajuste pour faire en sorte qu'à tout instant, l'intensité soit toujours la même.

Les procédés de désionisation décrits précédemment, lorsque les électrodes sont situées de part et d'autre du verre, qu'il soit mobile ou immobile, permettent d'obtenir, sur une face du verre, une zone superficielle sans ions les plus facilement déplaçables, en particulier les ions alcalins et les ions alcalino-terreux. Ces ions, par suite du champ électrique appliqué, migrent, dans l'épaisseur du verre, vers l'autre face du verre. Il en résulte une modification de la composition du verre sur cette face, due à la formation en surface de carbonate de sodium, qui nécessite un lavage pour l'éliminer, mais aussi une augmentation de la concentration en ions alcalins et alcalino-terreux au voisinage de cette face, ce qui peut entraîner un vieillissement plus rapide du verre.

Dans le cas du traitement d'un ruban de verre, en le faisant défiler sous des électrodes identiques, disposées du même côté du ruban de verre, comme décrit au brevet européen 237 431, on obtient un verre dont la nature de la deuxième face n'est pas modifiée, ce qui permet d'éliminer l'étape de lavage du verre. Cependant, dans ce mode de réalisation, la cathode, se trouvant en amont de l'anode suivant le sens de déplacement du verre, la zone du verre située sous la cathode s'enrichit en ions sodium et en surface, il se forme une couche de carbonate de sodium. Le traitement de la surface du verre est ainsi rendu irrégulier.

La présente invention a pour but un procédé de désionisation superficielle d'un ruban de verre, ainsi qu'un dispositif pour la mise en oeuvre de ce procédé, qui permettent d'éviter les inconvénients précités et, notamment, de traiter une surface de verre de manière continue, reproductible et homogène pour obtenir un produit en verre ne contenant pas d'ions alcalins et éventuellement, alcalino-terreux dans une zone superficielle sur une profondeur pratiquement constante sur toute la largeur du produit traité.

Le procédé de désionisation d'au moins une face d'un ruban ou d'une feuille de verre sodocalcique, selon l'invention, consiste à faire passer le ruban du verre chauffé à une température inférieure à la température de ramollissement du verre, dans un champ électrique continu établi entre des électrodes pour engendrer une décharge couronne propre à établir une liaison électrique avec le ruban ou la feuille de verre. Ce procédé se caractérise en ce qu'on fait passer le ruban ou la feuille de verre dans un champ électrique continu de manière à entraîner les ions alcalins et éventuellement, alcalino-terreux dans la profondeur et vers les parties latérales du ruban ou de la feuille de verre.

Dans la présente description, on utilisera le terme "ruban" pour plus de simplicité, pour définir le support à traiter. Il va de soi que le procédé et le dispositif selon l'invention sont utiles pour traiter aussi les feuilles de verre.

Le ruban de verre ainsi traité a la particularité de présenter, du côté de sa face traitée, et sur toute sa largeur, une zone superficielle centrale ne contenant pas d'ions alcalins et éventuellement, alcalino-terreux, sur une profondeur qui dépend de l'intensité du traitement, et des zones superficielles latérales enrichies en ces ions et portant un film de carbonate de sodium.

Un tel ruban a l'avantage de fournir, en continu, facilement, par simple découpe de ses parties latérales, une grande surface de verre ne contenant aucun ion alcalin et éventuellement, alcalino-terreux sur une profondeur qui dépend de l'intensité de traitement déterminée en fonction de l'utilisation ultérieure prévue du verre.

Un dispositif pour la mise en oeuvre du procédé de désionisation superficielle selon l'invention, d'au moins une face d'un ruban ou d'une feuille de verre sodocalcique chauffé(e) à une température inférieure à sa température de ramollissement, en mouvement relatif par rapport audit dispositif, pour le ou la soumettre à un champ électrique continu établi entre des électrodes rectilignes, parallèles au plan du ruban ou de la feuille de verre, pour engendrer une décharge couronne propre à établir une liaison électrique avec le ruban ou la feuille de verre. Ce dispositif se caractérise en ce qu'il comprend au moins une anode disposée de manière à recouvrir la partie centrale du ruban ou de la feuille de verre et au moins deux cathodes disposées de manière à recouvrir, chacune, une région latérale du ruban ou de la feuille de verre, ces cathodes étant décalées longitudinalement et transversalement des extrémités adjacentes de l'anode.

Le dispositif comprend, en particulier, des moyens pour faire défiler le ruban ou la feuille de verre chaud dans le champ électrique.

Au dessin annexé, donné seulement à titre d'exemple :
- la figure 1 représente une vue en perspective d'un dispositif selon l'invention,
- la figure 2 représente une vue en coupe transversale d'une électrode utilisable dans le dispositif selon l'invention,
- la figure 3 représente des schémas 3a à 3g de différentes positions possibles des électrodes selon l'invention,
- la figure 4 représente un profil des ions sodium déplacés suivant l'invention dans la partie centrale du verre, sous l'anode, ce profil étant obtenu par analyse par microsonde électronique.

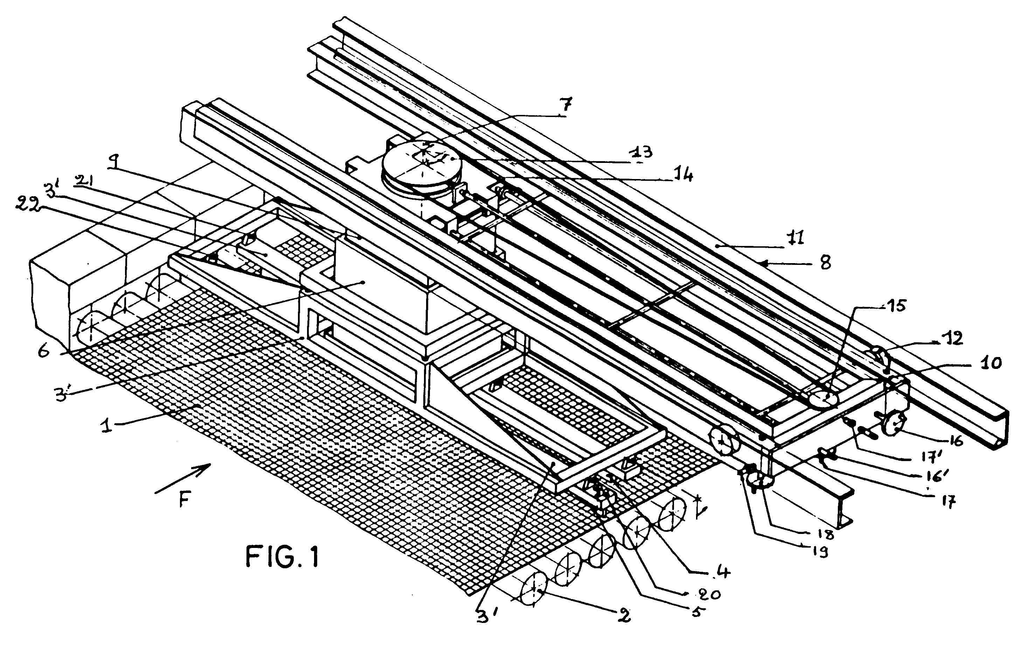

La figure 1 représente un dispositif selon l'invention disposé au-dessus d'un ruban de verre (1) dont la surface doit être désionisée. Le verre se déplace sur des rouleaux convoyeurs (2) ou tout autre moyen permettant le déplacement du verre.

Le dispositif représenté à la figure 1, comprend un porte-électrode (3) sur lequel sont montés des supports (3') pour des électrodes (anode et cathodes) rectilignes, parallèles au plan du ruban de verre. Ces électrodes, une anode (4) et deux cathodes (5), sont montées de manière à ce que l'anode recouvre la partie centrale du ruban de verre et que les cathodes, de dimension inférieure à celle de l'anode recouvrent, chacune, une région latérale du ruban de verre, ces cathodes étant décalées longitudinalement et transversalement des extrémités adjacentes de l'anode.

Sur cette figure, l'axe longitudinal des eletrodes est perpendiculaire à la direction de déplacement du ruban de verre et les deux cathodes sont situées en amont de l'anode par rapport au sens de déplacement du ruban de verre (représenté par la flèche F). Cette disposition des électrodes constitue un des modes de réalisation de l'invention, modes qui seront décrits ultérieurement.

Le porte-électrode (3) est monté sur un bloc (6) du du type tourelle qui permet de déplacer les électrodes, d'une part, perpendiculairement au plan du ruban de verre, de manière à augmenter ou à

3

diminuer la distance entre la surface du verre et les électrodes et, d'autre part, par rotation autour d'un axe (7) perpendiculaire au plan du ruban de verre, notamment pour modifier l'inclinaison de l'anode.

La tourelle (6) est elle-même solidaire d'un dispositif de translation (8) qui permet de déplacer le groupe porte-électrode/ tourelle transversalement au ruban de verre.

Pour assurer le déplacement du porte-électrode (3) perpendiculairement au plan du ruban de verre, le bloc (6) du type tourelle peut comprendre, par exemple, un vérin télescopique (9) permettant de prépositionner le porte-électrode, ce vérin étant associé à un moteur pas à pas pour obtenir un réglage fin de la position des électrodes par rapport à la surface du verre.

Le dispositif de translation (8) peut comprendre, par exemple, un chariot (10) mobile sur des rails (11) par l'intermédiaire de roulettes (12). Les rails sont fixés par tous moyens appropriés à la superstructure de l'installation de fabrication du verre. Le chariot (10) porte le bloc-tourelle (6) qui est solidaire d'une poulie (13) dont l'axe de rotation correspond à celui de la tourelle. La poulie (13) peut tourner sous l'action d'une autre poulie (15), dont la rotation est transmise à la poulie (13) par une câble (14). Sont aussi représentées sur la figure 1, des molettes (16, 16′) de commande de translation et de blocage du chariot, des molettes (17, 17′) de commande de rotation et de blocage de la tourelle (6) couplées à la poulie (15) et des molettes (18) et (19) pour la commande de correction de l'horizontalité du chariot (10) et pour le blocage des rails (11). Ce dispositif de translation permet, outre le déplacement du bloc-tourelle (6) transversalement au ruban de verre (1), de placer ce bloc (6) après son relèvement par le vérin (9), hors de la ligne de production pour changer les électrodes par exemple.

Le porte-électrode (3) comprend des moyens pour déplacer les cathodes par rapport à l'anode. Ces moyens sont constitués, par exemple, par un ensemble de lumières croisées (20), qui permet des déplacements parallèle et perpendiculaire des cathodes (5) par rapport à l'anode (4) ou bien qui permet d'incliner les cathodes sur la direction de déplacement du ruban de verre et par rapport à l'anode.

Pour assurer le déplacement du porte-électrode, et par conséquent des électrodes, par rapport au ruban de verre, tout système approprié connu peut être utilisé, celui représenté à la figure 1 et décrit précédemment ne constituant qu'un mode de réalisation possible.

Les électrodes, anode (4) et cathodes (5) sont montées, chacune, pendulairement autour d'un axe (21, 22) solidaire du porte-électrode. Les électrodes étant à une faible distance de la surface du ruban de verre, ce montage permet d'écarter les électrodes de la surface du verre lorsque celle-ci présente des irrégularités, et d'éviter, ainsi, un contact avec la surface du verre qui peut entraîner un blocage de la feuille de verre.

Ainsi, dès que les électrodes effleurent le verre, celles-ci pivotent autour de leur axe respectif (21, 22), en étant entraînées par le ruban de verre. Le vérin peut être alors actionné pour éloigner les électrodes.

Des électrodes, utiles dans le dispositif selon l'invention, comprennent une cavité transversale, reliée à une source de gaz plasmagène et débouchant, en face du ruban de verre, par une ouverture dans laquelle le gaz s'écoule perpendiculairement au ruban ou suivant une autre inclinaison, cette ouverture débouchant de l'électrode au raccordement d'une paroi verticale et d'une paroi inclinée sur le plan du ruban de verre.

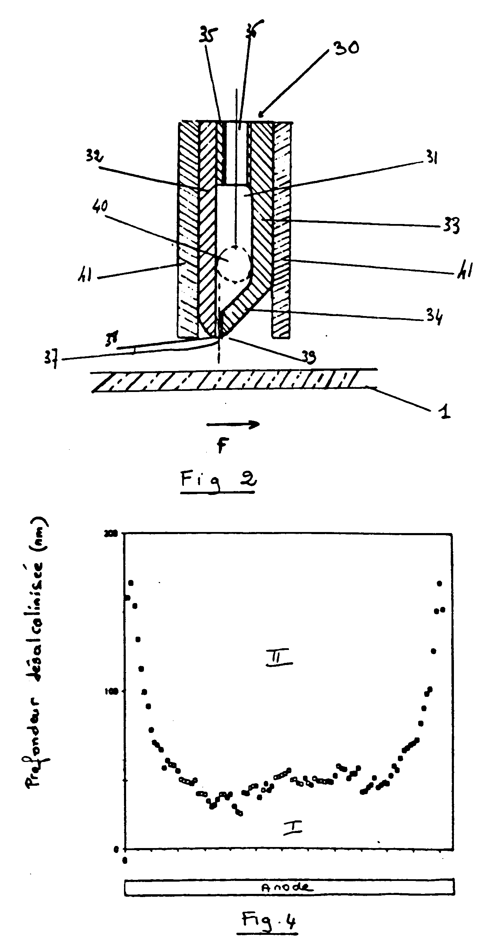

La figure 2 représente une vue en section d'une électrode particulièrement utile dans l'invention. L'électrode (30) présente une section en forme de trapèze rectangle, dont les bases sont orientées perpendiculairement au plan du ruban de verre. L'électrode (30) comprend une cavité transversale (31) limitée par des parois verticales (32, 33) et par une paroi inclinée (34). La paroi supérieure (35) de la cavité est percée d'au moins un orifice (36) par lequel la cavité (31) est reliée à une source de gaz plasmagène, non représentée. A sa partie inférieure, la cavité (31) débouche à proximité de la surface du ruban de verre par une ouverture (37) transversale dans laquelle s'écoule le gaz suivant une inclinaison qui peut être de 90° comme représenté à la figure ou bien d'une autre valeur, inférieure à 90°, pour s'opposer au mouvement d'entraînement du ruban de verre. Cette ouverture (37) se termine par deux lèvres (38 et 39) situées l'une en face de l'autre.

L'électrode, par suite de sa forme trapézoïdale, orientée comme décrit précédemment, présente une partie inclinée qui est proche de la zone où a lieu la décharge couronne, ce qui a l'avantage, en particulier, de faciliter la formation de cette décharge.

Suivant un mode de réalisation, la partie inférieure de l'électrode constituée par les bords des parois transversales verticale (32) et inclinée (34) a une forme arrondie. Cette configuration a l'avantage de faciliter l'accrochage de la décharge couronne.

L'ouverture (37) située à la partie inférieure de l'électrode (30) peut être constituée par une fente unique, par une pluralité de trous de section carrée, rectangulaire ou circulaire ou par une pluralité de tubes d'ajutages émergeant des lèvres de l'électrode, d'axe perpendiculaire au plan du ruban de verre.

Quelle que soit sa forme, l'ouverture (37) doit avoir une largeur qui permet de faciliter l'accrochage de la décharge et d'obtenir une vitesse du gaz élevée à la sortie de l'ouverture, favorable à la stabilité de la décharge. Cette largeur peut être comprise entre 0,1 et 0,8 mm. Une largeur inférieure à 0,1 mm ne permet pas d'accrocher la décharge au niveau de l'ouverture. La largeur de l'ouverture est avantageusement supérieure à 0,3 mm.

Lorsque l'ouverture est constituée d'une pluralité de trous ou de tubes d'ajutages, ceux-ci sont répartis, de préférence, régulièrement sur toute la longueur de l'électrode. L'écart entre ces trous ou ces tubes d'ajutages peut varier ; il est cependant préféré que cet écart soit faible, pour augmenter le nombre de trous ou de tubes d'ajutages et par suite, les zones d'accrochage de la décharge. Cet écart peut varier, par exemple entre 0,1 mm et 0,5 mm.

Selon un mode de réalisation avantageux, l'ouverture (37) de l'électrode (30) est constituée d'une pluralité de trous de section carrée de 0,5 mm de côté, espacés d'une distance de 0,5 mm.

La cavité (31) de l'électrode (30) contient, avantageusement, un répartiteur de gaz (40) qui est constitué par tout moyen permettant d'assurer une distribution uniforme du gaz plasmagène sur toute la longueur de l'électrode, par exemple une tige filetée.

L'électrode peut être entourée de jupes (41), en matériau isolant électrique, ayant la hauteur de l'électrode, pour protéger la décharge couronne et la confiner dans une zone restreinte, directement au-dessus du ruban de verre à traiter.

Le ruban de verre se déplace sous l'électrode dans le sens indiqué par la flèche sur la figure 2, mais il peut aussi se déplacer dans le sens inverse.

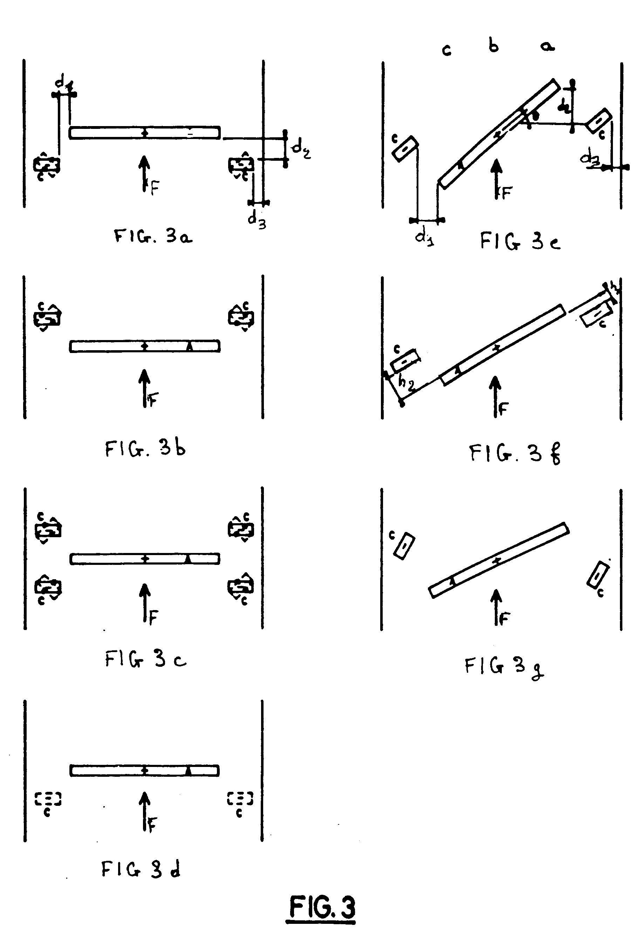

Comme indiqué précédemment, les électrodes sont disposées parallèlement au plan du ruban de verre, l'anode de manière à recouvrir la partie centrale du ruban de verre et les cathodes de manière à recouvrir les régions latérales du ruban de verre. Les cathodes sont, en outre, décalées longitudinalement et transversalement des extrémités adjacentes de l'anode. Différentes configurations sont possibles avec l'anode et les cathodes situées au-dessus ou au-dessous du verre. La figure 3 montre, à titre d'exemples, des schémas 3a à 3 g de différentes positions possibles des électrodes.

Aux schémas 3a à 3d, les électrodes, anodes et cathodes, sont disposées perpendiculairement à la direction de déplacement du ruban de verre, représentée par la flèche F et l'anode A est placée au-dessus de la partie centrale du ruban de verre. Les cathodes (C) peuvent être situées en amont (fig. 3a) ou en aval (fig. 3b) de l'anode A par rapport au sens de déplacement du ruban de verre. Suivant un autre mode de réalisation (fig. 3c), quatre électrodes sont disposées deux à deux symétriquement à l'anode. Selon un autre mode de réalisation, (fig. 3d), l'anode est disposée au-dessus de la face du ruban de verre à traiter et les cathodes, (représentées en pointillés --- à la fig. 3d), en nombre de deux ou quatre, en position amont ou aval de l'anode, sont situées sous le ruban de verre. Les cathodes peuvent être inclinées ou non sur la direction de déplacement du ruban, comme représenté en pointillés (-.-) aux figures 3a à 3c.

A la figure 3d, les cathodes sont représentées en pointillés pour indiquer qu'elles sont situées sous le ruban de verre. Il va de soi que, dans cette position, les cathodes peuvent aussi être inclinées.

Suivant d'autres modes de réalisation, présentés aux figures 3e, 3f et 3 g, l'anode est inclinée sur la direction de déplacement du ruban de verre et les deux cathodes sont parallèles entre elles et disposées l'une en amont et l'autre en aval de l'anode . Il est possible que les cathodes soient parallèles à l'anode (fig. 3e et 3f) ou bien inclinées par rapport à l'anode (fig. 3g). Pour ces modes de réalisation, les électrodes sont montées sur un porte-électrode (3), tel que représenté à la figure 1, qui comprend un deuxième support (3') de cathode. On peut modifier l'inclinaison des électrodes par rapport à la direction de déplacement du ruban de verre par rotation autour de l'axe (7) du bloc-tourelle (6), sur lequel est monté le porte-électrode (3) et aussi, pour les cathodes, en utilisant les moyens de déplacement (20) décrits précédement. A la figure 3g, les cathodes peuvent avoir une longueur plus grande pour augmenter l'intensité de courant à tension égale.

Sur les schémas 3a à 3g, on a représenté l'anode disposée au-dessus du ruban de verre. On doit noter qu'il est aussi possible de la placer sous le ruban de verre.

Quelle que soit l'orientation des électrodes, d'une part, par rapport à la direction de déplacement du ruban de verre et d'autre part, les unes par rapport aux autres, il est important, comme indiqué précédemment, que les cathodes soient décalées longitudinalement et transversalement des extrémités adjacentes de l'anode. Les extrémités des cathodes sont écartées transversalement d'une distance $d_1$ et longitudinalement d'une distance $d_2$ des extrémités adjacentes de l'anode.

Ces distances $d_1$ et $d_2$ sont déterminées en fonction de la tension appliquée afin d'éviter la formation d'arcs électriques.

Si la distance $d_1$ est maintenue à une valeur appropriée pour éviter la formation d'arcs électriques, la distance $d_2$ peut être, à la limite, nulle. Cependant, le traitement de désalcalinisation est plus homogène lorsque la distance $d_2$ augmente ; il est donc avantageux que, longitudinalement, les extrémités des cathodes soient éloignées des extrémités adjacentes de l'anode. Pour déterminer la valeur de $d_2$ appro-

priée, il faut aussi tenir compte du fait que, lorsque la distance $d_2$ augmente, la tension que l'on doit appliquer augmente aussi et, par suite, la puissance du générateur, ce qui peut entraîner des problèmes de dimensionnement et de sécurité. On doit noter en outre que la distance $d_2$ dépend aussi de la température du verre. En effet, si la température du verre diminue, les électrodes doivent être rapprochées pour travailler à une tension donnée.

On a pu déterminer que la distance $d_1$, c'est-à-dire l'écart transversal entre les extrémités adjacentes de l'anode et des cathodes, pouvait varier entre 1,5 et 5 cm et la distance $d_2$, écart longitudinal entre les extrémités adjacentes de l'anode et des cathodes, était avantageusement supérieure à 5 cm.

Lorsque l'anode est inclinée sur la direction de déplacement du ruban de verre, comme cela est représenté aux figures 3e-3g, l'axe longitudinal de l'anode fait avec la perpendiculaire à la direction de déplacement du ruban de verre, un angle 0 qui peut varier de 90° sans atteindre cette valeur, de bons résultats étant obtenus avec un angle de 30°.

Selon certains modes de réalisation, notamment représentés à la figure 3e, les cathodes sont situées en amont et en aval de l'anode. Il est avantageux, selon l'invention, de disposer l'axe longitudinal des cathodes en amont de l'anode à une distance ($h_1$) de l'axe de l'anode inférieure à celle ($h_2$) existant entre l'anode et la cathode disposée en aval de l'anode, comme représenté à la figure 3 f.

La longueur des électrodes dépend de la largeur du ruban de verre à traiter. La longueur de l'anode doit être la plus grande possible car la zone de verre traitée correspond à la partie du ruban de verre située sous l'anode.

Les cathodes recouvrent les parties latérales du ruban de verre qui correspondent aux zones du ruban de verre vers lesquelles migrent les ions alcalins et alcalino-terreux et à la surface desquelles se forme du carbonate de sodium. Ces parties sont destinées à être éliminées ultérieurement par découpe. Les longueurs des cathodes doivent donc être très inférieures à celle de l'anode afin de ne pas limiter la zone traitée.

La longueur totale de l'anode et des cathodes doit tenir compte de l'écart transversal $d_1$ entre les extrémités adjacentes de l'anode et des cathodes et naturellement de la largeur du ruban de verre.

Une autre distance à prendre en compte est la distance $d_3$ qui correspond à l'écart transversal entre les cathodes et le bord du ruban de verre. En effet, lorsque le verre (1) est entraîné par des rouleaux (2) (fig. 1), la proximité des cathodes du bord du ruban de verre peut entraîner un court-circuit si les rouleaux ne sont pas isolés. Cette distance $d_3$ peut varier entre 0, si les rouleaux d'entraînement sont isolés, et 3 cm environ lorsqu'ils ne le sont pas.

Quelle que soit la disposition des électrodes les unes par rapport aux autres, et par rapport au ruban de verre, on a pu observer que le verre est traité d'une manière semblable, c'est-à-dire comme décrit précédemment, que le verre comprend une zone superficielle centrale qui ne contient pas d'ions alcalins et alcalino-terreux et deux zones superficielles latérales enrichis en ces ions.

La figure 4 représente un profil de concentration des ions sodium déplacés. Ce profil est obtenu par analyse par microsonde électronique. En abscisse est donnée la dimension de l'anode, à laquelle correspond la zone du verre désionisée. En ordonnée sont indiquées les profondeurs désionisées (en nm) et donc correspondant à une partie seulement de l'épaisseur du verre. Ce profil délimite deux zones. La zone I correspond à la profondeur de verre désalcalinisée, la zone II à une région de verre n'ayant pas subi le traitement, les ions qui migrent sous l'action du champ électrique se déplaçant en bloc d'abord en direction de l'autre face du ruban de verre, puis vers les parties latérales non représentées sur la figure.

On doit noter que si, sur cette figure, on ne représente que la migration des ions alcalins, qui est le principal but recherché puisque leur présence en surface du verre entraîne des problèmes lors de l'utilisation ultérieure du verre (concernant notamment l'adhérence de couches superficielles, la diffusion des ions alcalins dans ces couches), il est bien entendu que les ions alcalinoterreux contenus dans le verre migrent aussi sous l'action du champ électrique, mais d'une manière moins prononcée que celle des ions alcalins (en fonction de la température du verre). Ainsi, le profil des ions alcalino-terreux, sur la figure 4, serait placé entre celui des ions sodium et la surface du verre, représentée par l'abscisse sur la figure 4.

Le procédé selon l'invention, comme décrit précédemment, consiste à faire défiler un ruban de verre chauffé dans un champ électrique continu, établi entre des électrodes rectilignes pour engendrer une décharge couronne propre à établir une liaison électrique avec le ruban de verre, de manière à déplacer les ions dans la profondeur du ruban et vers les parties latérales du ruban de verre.

Pour désioniser la surface d'un ruban de verre, ce dernier doit être chauffé à une température suffisante pour permettre la migration des ions. Généralement, le verre est chauffé à une température inférieure à sa température de ramollissement.

De préférence, la température est supérieure à 400°C pour permettre la migration des ions alcalins et des ions alcalino-terreux. A des températures inférieures à 400°C, seuls les ions alcalins migrent sous l'action du champ électrique. Un tel traitement à une température inférieure à 400°C peut présenter un intérêt, en fonction de l'utilisation ultérieure prévue car la présence des ions alcalino-terreux, tels que le calcium, permet d'améliorer l'adhérence des couches ultérieurement déposées.

Le traitement de désionisation du ruban de verre est avantageusement effectué sur l'installation même de fabrication du verre, par exemple à la sortie du four float et avant l'entrée de l'étenderie. Dans cette zone, la température du verre est de l'ordre de 600° à 700°C, température qui convient pour le traitement selon l'invention.

Pour obtenir un traitement uniforme du verre, il faut assurer la stabilité et l'homogénéité de la décharge, en contrôlant certains facteurs comme la distance entre les électrodes et la surface du verre, la tension appliquée, la configuration des électrodes, la vitesse du gaz plasmagène.

La distance entre les électrodes et la surface du verre doit être réglée avec soin puisque cette distance définit l'espace dans lequel se forme la décharge couronne et que la stabilité et l'homogénéité de cette décharge nécessaires pour permettre un traitement uniforme et continu en dépendent.

Pour déterminer cette distance, il faut tenir compte de la zone où a lieu le traitement de désionisation ; en effet, dans cette zone, située, comme indiqué précédemment, à la sortie du four float, le ruban de verre peut se déplacer sur des rouleaux convoyeurs et présente en conséquence des ondulations. Il est important que les électrodes ne soient pas en contact avec la surface du verre. La distance doit donc être suffisante pour éviter tout contact. Cependant, une distance électrodes-verre faible facilite l'amorçage de la décharge avec une tension faible, limitant ainsi les risques de formation d'arcs. Cette distance ne doit pas être trop grande pour éviter les risques de dégénérescence de la décharge. Pour satisfaire à toutes ces exigences, la distance entre les électrodes et la surface de verre peut être comprise avantageusement entre 2 et 4 mm environ.

Les électrodes sont reliées à une source de gaz plasmagène. Tout gaz plasmagène peut être utilisé. Cependant, dans l'invention, pour obtenir une décharge stable, notamment pour des électrodes situées à une distance comprise entre 2 et 4 mm de la surface du verre, on préfère utiliser de l'hélium à l'anode et de l'argon ou de l'hélium aux cathodes. La vitesse du gaz à la sortie de l'électrode, est, de préférence élevée, pour obtenir une bonne stabilité de la décharge. Ceci peut être obtenue notamment en utilisant des électrodes dont l'ouverture (37) est formée d'une pluralité de trous de section faible, comme indiqué précédemment. Il est aussi avantageux que le traitement se fasse dans une enceinte fermée pour éviter que des courants d'air à la sortie du four et les mouvements d'air dus à la vitesse du ruban de verre ne perturbent l'alimentation régulière et homogène en gaz.

Selon l'invention, on utilise, pour le traitement de désionisation, un courant continu dont l'intensité s'ajuste en fonction de la résistance du verre.

Pour assurer la stabilité et l'homogénéité de la décharge, il est préférable de travailler en limitation de tension afin que le plasma puisse s'autoréguler en fonction des caractéristiques locales du verre.

La tension est limitée à une valeur déterminée en fonction de l'intensité de traitement désirée, évaluée, pour un verre donné à une température déterminée, par la quantité de charges en coulomb appliquée au verre par unité de surface.

De préférence, le verre étant à la masse, le potentiel est flottant, c'est-à-dire qu'il n'est pas fixé par rapport à la masse afin de pouvoir créer un double plasma positif et négatif à la surface du verre.

La tension est la plus élevée possible, dans la limite imposée, pour obtenir un traitement intense, tout en tenant compte notamment de la disposition des électrodes pour éviter la formation d'arcs électriques.

Lorsque la tension augmente, il faut tenir compte, en outre, de la possibilité de formation d'arcs électriques entre le verre et les rouleaux convoyeurs. Il peut être souhaitable, en fonction de la tension appliquée, d'isoler les rouleaux situés dans la zone de traitement en les recouvrant par de l'amiante par exemple.

La résistance du verre d'après laquelle l'intensité est ajustée suivant l'invention, dépend de la température du verre, du taux d'ions alcalins et alcalino-terreux, de la vitesse de déplacement du ruban de verre et de la largeur de verre à traiter, c'est-à-dire la largeur de verre située sous l'anode.

Les deux derniers paramètres, la vitesse de déplacement du ruban de verre qui peut varier de 3 à 25 m/mn et la largeur de verre à traiter qui peut atteindre 3 m environ, déterminent le nombre d'ions, ou de porteurs de charge, disponibles, par unité de temps, sous les électrodes, et par conséquent la conductance du verre. Si la vitesse et la largeur du ruban augmentent, le nombre de porteurs de charge augmente et, par suite, la conductance. Le traitement de désionisation, c'est-à-dire la migration de ces porteurs de charge, nécessite alors une intensité de courant plus élevée, et par conséquent un générateur de puissance plus grande. Si l'on souhaite utiliser une intensité limitée, il est nécessaire de contrôler ces facteurs de vitesse de déplacement et de largeur à traiter pour qu'ils n'augmentent pas ensemble jusqu'à nécessiter une puissance élevée.

7

En ce qui concerne la température du verre que l'on doit traiter, comme indiqué précédemment, on a intérêt à ce qu'elle soit la plus élevée possible, tout en restant inférieure à la température de ramollissement du verre, pour permettre la migration des ions. Cependant, une température trop élevée, peut poser des problèmes lors du traitement de recuit subséquent à la désionisation, comme il le sera décrit ultérieurement.

Le traitement de désionisation selon l'invention, permet de créer, à la surface du verre, une couche exempte d'ions alcalins et éventuellement, alcalino-terreux. Cela se traduit par la formation d'une couche superficielle enrichie en silice. La nature de l'autre face du verre n'est pas modifiée par le traitement, ce qui a l'avantage d'éviter un vieillissement prématuré de cette face.

Comme mentionné précédemment, le ruban de verre traité selon l'invention, a la particularité de présenter, du côté de sa face traitée, et sur toute sa largeur, une zone superficielle centrale ne contenant pas d'ions alcalins et alcalino-terreux sur une profondeur qui dépend de l'intensité du traitement, et deux zones superficielles latérales enrichies en ions déplacés et portant un film de carbonate de sodium. Ces zones latérales peuvent être éliminées ultérieurement par découpe, ce qui permet d'obtenir un produit traité pratiquement régulièrement en surface.

L'épaisseur de verre traité dépend, pour un verre donné à une température déterminée, de l'intensité du traitement qui se mesure au nombre de coulomb appliqué au verre par unité de surface. Elle dépend donc de la vitesse de déplacement du ruban de verre, de l'intensité du courant et de la largeur de verre à traiter, facteurs mentionnés précédemment.

Pour évaluer l'épaisseur de verre désionisé, on doit tenir compte en outre du passage du ruban de verre dans l'étenderie après son traitement de désionisation. Le verre n'étant plus soumis à un champ électrique et la température ne diminuant que progressivement dans l'étenderie, les ions alcalins ont tendance à remigrer vers la surface du verre qui avait été traitée. On doit noter que, si la température du verre est très grande lors du traitement de désionisation, la température du verre de l'étenderie, étape subséquente, sera élevée et la remigration des ions sera plus importante lors du passage du verre, d'où la nécessité de trouver un compromis entre l'utilisation d'une température élevée du verre favorisant la migration des ions sous l'action du champ électrique et une température appropriée pour minimiser la remigration des ions dans l'étenderie.

La remigration des ions alcalins est cependant limitée par les ions alcalino-terreux qui, comme indiqué précédemment, migrent moins que les ions sodium, sous l'action d'un champ électrique et constituent, un front bloquant la remigration des ions alcalins. On compte, en général, une remigration des ions sodium de 30 % par suite de la recuisson du verre. Les valeurs d'épaisseur de verre traité, indiqué dans la présente demande, tiennent compte de cette remigration et sont évaluées après la recuisson.

On a pu noter qu'un traitement ultérieur du verre désionisé, notamment un traitement de trempe par contact, qui a lieu par exemple à 650°C pendant 2 à 3 mn ne détruit pas la désionisation de la surface de verre, mais la diminue seulement. On peut atténuer la remigration des ions alcalins lors de la trempe, en anticipant la remigration des ions pendant le recuit, par exemple en agissant sur la température du verre et l'intensité du traitement pendant la désalcalinisation.

Les exemples suivants, non limitatifs, illustrent l'invention.

## EXEMPLE 1

On fait défiler un ruban de verre sodocalcique contenant 13 à 14 % de $Na_2O$, d'une épaisseur de 5,5 mm, à une vitesse de 3,27 m/mn sous un dispositif tel que décrit à la figure 1. Le verre est à une température de 700°C.

Les électrodes sont disposées suivant la configuration représentée à la figure 3a. Les électrodes sont rectilignes et telles que représentées à la figure 2, l'ouverture (37) étant formée par une fente de 0,5 mm. La distance entre les électrodes et la surface du verre est de 3 mm. L'anode a une longueur de 100 cm et les cathodes une longueur de 3 cm. Les extrémités des cathodes sont écartées de l'extrémité adjacente de l'anode, transversalement d'une distance $d_1$ égale 2 cm et longitudinalement d'une distance $d_2$ égale à 18 cm. L'anode est alimentée en hélium à un débit de 70 l/mn. Les cathodes sont aussi alimentées en hélium à un débit de 2 à 3 l/mn. La tension d'amorçage de la décharge couronne est de 900 V et la tension de fonctionnement limitée à 1050 V. L'intensité est, en moyenne, de 5 A. La décharge couronne obtenue est stable et homogène sur toute la largeur du verre traité. L'épaisseur de verre traitée est de 20 nm, valeur déterminée après passage du verre dans l'étenderie.

## EXEMPLE 2

Dans cet exemple, le ruban de verre décrit à l'exemple 1 défile, à la même vitesse, sous des électrodes disposées comme il est représenté à la figure 3e. L'anode et les cathodes sont identiques à celles de l'exemple 1. L'axe longitudinal de l'anode forme un angle 0 de 30° avec la perpendiculaire à la direction de déplacement du ruban de verre. Les extrémités des cathodes sont situées à une distance des extrémités adjacentes de l'anode, transversalement de 2 cm et longitudinalement de 25 cm. La tension appliquée est de 1260 V et l'intensité est de 3 A en moyenne. L'épaisseur de verre traitée est de 20 nm.

On a observé cependant dans la zone a du traitement, une certaine instabilité de la décharge due au fait que la cathode, dans cette zone, se trouve en position amont de l'anode.

Pour obtenir une décharge stable, on a rapproché la cathode située en amont de l'anode pour qu'elle soit éloignée longitudinalement de l'anode d'une distance $h_1$ de 20 cm environ (voir figure 3f).

Dans ces conditions, on a pu obtenir une décharge couronne de très bonne qualité pour une tension limitée à 1270 V et une intensité de 3 A, en moyenne.

Dans les exemples, on a décrit plus particulièrement la désionisation d'un ruban de verre en utilisant des électrodes comprenant une ouverture (37) sous forme d'une fente. On peut aussi utiliser des électrodes ayant une ouverture présentant une autre configuration, telle que décrite précédemment, et notamment une ouverture formé d'une pluralité de trous, particulièrement de section carrée, qui permet d'obtenir, notamment, un meilleur accrochage de la décharge couronne et de contrôler la vitesse du gaz émergeant de ces orifices.

Il est aussi avantageux d'augmenter la distance $d_2$ entre l'anode et les cathodes, en limitant la hausse de tension, afin d'améliorer encore l'homogénéité de la décharge. D'autre part, la limitation en tension permet aussi de réduire le nombre de rouleaux qui doivent être isolés pour éviter tout court-circuit.

Dans les exemples, la surface traitée du verre a une largeur de 100 cm. Cependant, le traitement de désionisation sur une plus grande largeur peut être envisagée selon l'invention, en adaptant les paramètres tels que la tension et l'intensité du courant électrique.

Comme indiqué précédemment, le traitement de désionisation permet la formation, du côté de la face traitée, d'une couche superficielle ne contenant pas d'ions alcalins et alcalino-terreux, ce qui se traduit par une couche superficielle enrichie de silice. Cette couche confère au verre un certain nombre de propriétés notamment optiques, physicochimiques et mécaniques. Ainsi, la transmission lumineuse peut être augmentée jusqu'à 1,5 % pour une épaisseur désionisée de 100 nm, par face traitée. En ce qui concerne les propriétés physicochimiques, on obtient une meilleure adhérence des couches déposées ultérieurement sur le verre traité et une bonne tenue au vieillissement du verre traité.

On obtient aussi une surface qui résiste bien à l'attaque par des produits chimiques. D'autre part, les caractéristiques de mouillabilité sont modifiées. Ainsi, après nettoyage du verre, par exemple avec de l'eau et du savon, puis avec de l'alcool, et séchage en étuve à 60°C, l'angle de contact d'une goutte d'eau sur la surface du verre traité augmente de 10 à 20 degrés.

Pour ce qui est des propriétés mécaniques, on n'observe pas de modifications par rapport à celles du verre non traité, notamment en ce qui concerne la résistance à la rayure.

En outre, comme on l'a déjà indiqué, lors d'un traitement thermique ultérieur du verre, par exemple lors de la trempe, ce sont les ions alcalino-terreux, comme le calcium, qui ont migré pendant le traitement, qui contrôlent la remigration des ions alcalins. Les ions alcalins restent ainsi bloqués au front constitué par les ions alcalino-terreux.

La présence de la couche superficielle enrichie en silice permet l'utilisation du verre traité selon l'invention, sans nécessiter le dépôt d'une couche spécifique servant de barrière aux ions sodium, dans des produits à revêtement électroconducteur, tels que des vitrages chauffants, des vitrages bas émissifs, des produits pour l'électronique, notamment des dispositifs d'affichage à cristaux liquides, dans lesquels la migration d'ions sodium contenus dans le verre vers des couches déposées ultérieurement, doit être évitée.

L'amélioration de la transmission lumineuse et, par conséquent, la diminution de la réflexion de la lumière, des verres traités selon l'invention permet leur utilisation dans les domaines où une meilleure transmission lumineuse est nécessaire. Par exemple, on peut utiliser les verres selon l'invention comme verre horticole lorsqu'une telle transmission lumineuse est nécessaire, comme vitrages pour véhicules automobiles, comme vitrages antireflets pour le bâtiment et l'automobile et aussi dans des domaines particuliers comme celui des verres pour l'électronique tels que cellules photovoltaïques. Le traitement de ces verres sur une profondeur de 100 nm suffit.

La meilleure adhérence de couches déposées sur la surface du verre traitée conduit à l'utilisation de ces verres dans les vitrages feuilletés qui comprennent une feuille intercalaire de polymère , par exemple du polyvinylbutyral (PVB), et dans des miroirs pour l'adhérence des couches à base d'argent. Pour ces applications, une épaisseur de verre traitée de 20 nm à 30 nm convient.

Les tableaux suivant montrent les caractéristiques de supports de verre traités ou non traités, pour différentes applications.

Le tableau I concerne un verre extra-clair (verre "Albarino" marque déposée par SAINT-GOBAIN, comprenant 0,0150 % de fer sous forme de $Fe_2O_3$) utile pour des produits photovoltaïques. Le tableau donne les propriétés optiques du verre extra-clair avant et après traitement de désionisation. On constate une amélioration de la transmission lumineuse (TL), du facteur énergétique de transmission (FET) et du facteur solaire (FS). Le verre traité présente un facteur énergétique de réflexion (FER), une réflexion lumineuse (RL) et un facteur énergétique d'absorption (FEA) moindres.

## TABLEAU I
## Comparaison des propriétés optiques du verre
## extra-clair avant et après traitement

| Echantillons de 3,6 mm d'épaisseur | $T_L$ | FET | FS | RL | FER | FEA |
|---|---|---|---|---|---|---|
| N° 1 "Albarino" témoin | 91,5 | 91,1 | 91,4 | 7,9 | 7,8 | 1,1 |
| N° 2 "Albarino" traité 1 face sur 60 nm | 92,8 | 92,0 | 92,2 | 6,7 | 7,1 | 0,9 |

Le tableau 2 concerne des vitrages feuilletés pour l'aviation et pour l'automobile, dont le substrat de verre a été traité et non traité et pour lesquels on a mesuré les forces de pelage de la feuille de polymère (polyvinylbutyral).

## TABLEAU 2

### Comparaison de l'adhérence du PVB dans des vitrages feuilletés pour l'aviation et l'automobile

| : Echantillons : Epaisseur traitée : Intensité de traitement | Force de pelage W/cm |  |
|---|---|---|
| | Témoin | Zone traitée |
| N°3  25 nm  21 mC/cm² | PVB aviation    25 ± 3 <br> PVB auto       3,5 ± 0,5 | 50 ± 6 <br> 7 ± 2 |
| N°4  15 nm  9 mC/cm² | PVB aviation    21 ± 1 <br> PVB auto        4 ± 0,5 | 48 ± 5 <br> 8,5 ± 2 |

On peut constater qu'un verre traité recouvert de PVB présente une augmentation de la force de pelage supérieure ou égale à 100 %.

On étudie aussi le vieillissement de produits traités selon l'invention, non recuits et recuits pendant 20 mn à 450°C.

Pour cela, on évalue la résistance d'un verre désionisé selon l'invention, vis-à-vis d'électrolytes. L'essai est effectué dans une cellule dont les parois sont constituées par les faces du verre. La cellule est remplie d'eau à forte résistivité, maintenue à 90°C. Dans l'eau, plongent deux électrodes de platine. L'ensemble est thermostaté et l'on suit l'évolution de la conductivité dans le temps, c'est-à-dire le passage éventuel, dans l'eau, d'ions provenant des faces du verre traité. On note le temps à partir duquel la conductivité de l'eau évolue brutalement.

On effectue aussi un test de relargage d'ions sodium, selon lequel on mesure la masse d'ions sodium relarguée en 24 h à 95°C dans la cellule précédente, ramenée à l'unité de surface du verre.

## TABLEAU 3

| | Echantillons | | |
|---|---|---|---|
| | 5 | 6 | 7 (*) |
| Intensité de traitement | 21 mC/cm² | 9 mC/cm² | |
| Epaisseur de traitement | 100 nm | 15 nm | |
| **Non recuit** | | | |
| Na 24 h µg/m² | ≤ 0,015 | 0,14 | 7,5 |
| Conductivité (mn) | - | - | 1500 |
| **Recuit** | | | |
| Na 24 h µg/m² | 0,15 | 0,15 | |
| Conductivité (mn) | > 40000 | | |

(*) témoin non traité

La présente invention a été décrite pour le traitement d'un ruban de verre en mouvement. Il est bien entendu que le procédé et le dispositif selon l'invention peuvent être aussi utilisés pour le traitement de feuille de verre immobile, dans lequel cas, le dispositif selon l'invention est mobile par rapport au verre. L'important est que le support de verre et le dispositif soit en mouvement relatif l'un par rapport à l'autre.

Il est aussi possible, si cela est nécessaire, d'utiliser plusieurs dispositifs montés successivement au-dessus du ruban de verre pour obtenir un traitement plus poussé du verre.

Il est possible aussi de former sur le verre, après son traitement selon l'invention, une couche conductrice, par exemple une couche d'oxyde métallique tel que de l'oxyde d'indium et d'étain (ITO) ou d'oxyde d'étain dopé par exemple par du fluor ou du chlore, par des procédés connus, notamment par pyrolyse de composés métalliques sous forme de solution, poudre ou vapeur. Les vitrages obtenus peuvent alors être utilisés comme vitrages bas émissifs, notamment pour le bâtiment, et comme vitrages électroconducteurs, notamment chauffants par exemple pour des pare-brise.

Comme indiqué précédemment, avec le verre traité selon l'invention, qui comprend une couche superficielle enrichie en silice, il n'est pas nécessaire de déposer une couche barrière aux ions sodium avant la formation de la couche conductrice.

En outre, lorsque les couches conductrices formées sur le verre traité selon l'invention sont obtenues à partir de composés métalliques tels que chlorure d'étain, chlorure d'indium, on n'observe dans la couche finale, aucun défaut du type voile blanc qui est dû à la réaction entre les ions chlorure et les ions sodium contenus dans un verre non traité selon l'invention.

En outre, si les deux faces du ruban de verre doivent être traitées, il est possible de disposer sous le ruban de verre, dans une zone immédiatement adjacente à celle du premier traitement ou dans une zone plus éloignée, un dispositif analogue à celui décrit précédemment.

Dans ce cas, le profil de concentration d'ions sodium, pour la deuxième face traitée, est analogue à celui de la première face traitée, mais inversé, la zone II (fig. 4) située dans l'épaisseur du verre restant non traité. On obtient ainsi un verre comprenant deux couches superficielles enrichies en silice, ayant les propriétés mentionnées précédemment. Notamment, un tel verre présente une transmission lumineuse très améliorée qui peut être, par exemple, dans le cas de verre float, de 91,5 % pour une épaisseur désionisée de 100 nm par face traitée.

**Revendications**

1. Procédé de désionisation superficielle d'au moins une face d'un ruban ou d'une feuille de verre sodocalcique consistant à faire passer ledit ruban ou ladite feuille chauffée à une température inférieure à la température de ramollissement du verre, dans un champ électrique continu établi entre des électrodes, pour engendrer une décharge couronne propre à établir une liaison électrique avec le ruban ou la feuille de verre, caractérisé en ce qu'on fait passer le ruban ou la feuille de verre dans le champ électrique de manière à déplacer les ions dans la profondeur du ruban ou de la feuille et vers la partie latérale du ruban ou de la feuille de verre en disposant au moins une anode (4) de manière à recouvrir la partie centrale du ruban ou de la feuille de verre (1) et au moins deux cathodes (5) de manière à recouvrir, chacune, une région latérale du ruban ou de la feuille de verre (1), ces cathodes étant décalées longitudinalement et transversalement des extrémités adjacentes de l'anode (4).

2. Procédé conforme à la revendication 1, caractérisé en ce que le champ électrique est créé par un courant continu dont la tension est limitée et dont l'intensité s'ajuste en fonction de la résistance du verre.

3. Procédé conforme à l'une quelconque des revendications 1 à 2, caractérisé en ce que la tension est limitée à une valeur déterminée en fonction de l'intensité désirée du traitement, évaluée par le nombre de coulomb appliqué au verre par unité de surface, et en fonction du verre et de sa température.

4. Procédé conforme à l'une quelconque des revendications 1 à 3, caractérisé en ce que le verre étant à la masse, la tension est flottante.

5. Procédé conforme à l'une quelconque des revendications 1 à 4, caractérisé en ce qu'on traite les deux faces du ruban ou de la feuille de verre pratiquement simultanément ou successivement.

6. Procédé conforme à l'une des revendications 1 à 5, caractérisé en ce que le traitement a lieu à une température inférieure à 400°C.

7. Dispositif pour la mise en oeuvre du procédé de désionisation superficielle d'au moins une face d'un ruban ou d'une feuille de verre (1) sodocalcique chaud en mouvement relatif par rapport au dispositif, pour le ou la soumettre à un champ électrique établi par des électrodes rectilignes, parallèles au plan du ruban ou de la feuille de verre, pour engendrer une décharge couronne propre à établir une liaison électrique avec le ruban ou la feuille de verre, caractérisé en ce qu'il comprend au moins une anode (4) disposée de manière à recouvrir la partie centrale du ruban ou de la feuille de verre (1) et au moins deux cathodes (5) disposées de manière à recouvrir, chacune, une région latérale du ruban ou de la feuille de verre (1), ces cathodes (5) étant décalées longitudinalement et transversalement des extrémités adjacentes de l'anode (4).

8. Dispositif conforme à la revendication 7, caractérisé en ce que l'anode et les deux cathodes sont perpendiculaires à la direction de déplacement du ruban de verre.

9. Dispositif conforme à la revendication 8, caractérisé en ce que l'anode est disposée au-dessus de la face du ruban de verre à traiter et les cathodes, en position amont ou aval de l'anode, sont situées sous le ruban de verre.

10. Dispositif conforme à la revendication 7, caractérisé en ce qu'il comprend quatre cathodes perpendiculaires à la direction de déplacement du ruban de verre et disposées deux à deux symétriquement à l'anode.

11. Dispositif conforme à la revendication 7, caractérisé en ce que les cathodes sont inclinées sur la direction de déplacement du ruban de verre.

12. Dispositif conforme à la revendication 7, caractérisé en ce que l'anode est inclinée sur la direction de déplacement du ruban de verre et les deux cathodes sont parallèles entre elles et disposées l'une en amont et l'autre en aval de l'anode.

EP 0 452 180 B1

**13.** Dispositif conforme à la revendication 12, caractérisé en ce que les cathodes sont parallèles à l'anode.

**14.** Dispositif conforme à l'une des revendications 7 à 13, caractérisé en ce que les électrodes sont montées sur un porte-électrode (3), des moyens étant prévus pour faire tourner le porte-électrode autour d'un axe (7) perpendiculaire au ruban de verre.

**15.** Dispositif conforme à l'une des revendications 7 à 14, caractérisé en ce que les électrodes (4, 5) sont chacune montées pendulairement autour d'un axe (21, 22) solidaire du porte-électrode (3).

**16.** Dispositif conforme à l'une des revendications 7 à 15, caractérisé en ce que chaque électrode comprend une cavité (31) transversale alimentée par une source de gaz plasmagène et débouchant en face du ruban de verre par une ouverture (37) dans laquelle le gaz s'écoule perpendiculairement au plan du ruban de verre ou suivant une autre inclinaison, cette ouverture (37) débouchant de l'électrode au raccordement d'une paroi verticale (32) et d'une paroi inclinée (34) sur le plan du ruban de verre.

**17.** Dispositif conforme à la revendication 16, caractérisé en ce que la cavité (31) a une section en forme de trapèze et comprend un répartiteur de gaz (40).

**18.** Dispositif conforme à l'une des revendications 16 à 17, caractérisé en ce que l'électrode est entourée de jupes (41) ayant la hauteur de l'électrode.

**19.** Ruban ou feuille de verre sodocalcique désonisé(e) superficiellement, caractérisé(e) en ce qu'il(elle) présente, du côté de sa face traitée, et sur toute sa largeur, une zone superficielle centrale ne contenant pas d'ions alcalins et éventuellement, alcalino-terreux sur une profondeur qui dépend de l'intensité du traitement évaluée par le nombre de coulomb appliqué au verre par unité de surface, pour un verre donné à une température déterminée, et deux zones superficielles latérales enrichies en ions.

**20.** Ruban ou feuille de verre sodocalcique désonisé(e) superficiellement, caractérisé(e) en ce qu'il(elle) présente, sur ses deux faces traitées, et sur toute sa largeur, une zone superficielle centrale ne contenant pas d'ions alcalins et éventuellement, alcalino-terreux sur une profondeur qui dépend de l'intensité du traitement évaluée par le nombre de coulomb appliqué au verre par unité de surface, pour un verre donné à une température déterminée, et deux zones superficielles latérales enrichies en ions.

**Claims**

**1.** Method of surface deionisation of at least one face of a band or sheet of sodocalcic glass, consisting of causing said band or sheet, heated to a temperature lower than the softening temperature of the glass, to pass through a continuous electrical field established between electrodes, for the purpose of creating a corona discharge adapted for establishing an electrical connection with the band or sheet of glass, characterized in that the band or sheet of glass is caused to pass through the electrical field in such a way as to displace the ions into the depth of the band or sheet and towards the lateral part of the band or sheet of glass, by disposing at least one anode (4) in such a manner as to cover the central part of the band or sheet of glass (1) and at least two cathodes (5) in such a manner as to cover, each, a lateral region of the band or sheet of glass (1), these cathodes being longitudinally and transversely offset from the adjacent ends of the anode (4).

**2.** Method according to Claim 1, characterized in that the electrical field is created by a direct current, the voltage of which is limited and the intensity of which adjusts itself as a function of the resistance of the glass.

**3.** Method according to any one of Claims 1 to 2, characterized in that the voltage is limited to a value determined as a function of the desired intensity of the treatment, evaluated by the number of coulombs applied to the glass per unit of area and as a function of the glass and of its temperature.

**4.** Method according to any one of Claims 1 to 3, characterized in that the glass being earthed, the voltage is floating.

14

**5.** Method according to any one of Claims 1 to 4, characterized in that the two faces of the glass band or sheet are treated virtually simultaneously or successively.

**6.** Method according to one of Claims 1 to 5, characterized in that the treatment takes place at a temperature lower than 400 °C.

**7.** Device for carrying out the surface deionisation method of at least one face of a band or sheet of hot sodocalcic glass (1) in relative movement to the device, for the purpose of subjecting it to an electrical field established by rectilinear electrodes, parallel to the plane of the glass band or sheet, for creating a corona discharge adapted for establishing an electrical connection with the glass band or sheet, characterized in that it comprises at least one anode (4) disposed so as to cover the central part of the glass band or sheet (1) and at least two cathodes (5) disposed so as to cover, each, one lateral region of the glass band or sheet (1), these cathodes (5) being offset longitudinally and transversely from the adjacent ends of the anode (4).

**8.** Device according to Claim 7, characterized in that the anode and the two cathodes are perpendicular to the direction of travel of the glass band.

**9.** Device according to Claim 8, characterized in that the anode is disposed above the face of the glass band to be treated and the cathodes, in a position upstream or downstream of the anode, are situated beneath the glass band.

**10.** Device according to Claim 7, characterized in that it comprises four cathodes perpendicular to the direction of travel of the glass band and disposed in pairs symmetrically to the anode.

**11.** Device according to Claim 7, characterized in that the cathodes are inclined to the direction of travel of the glass band.

**12.** Device according to Claim 7, characterized in that the anode is inclined to the direction of travel of the glass band and the two cathodes are parallel to each other and are disposed the one upstream of and the other downstream of the anode.

**13.** Device according to Claim 12, characterized in that the cathodes are parallel to the anode.

**14.** Device according to one of Claims 7 to 13, characterized in that the electrodes are mounted on an electrode carrier (3), means being provided for turning the electrode carrier about an axis (7) perpendicular to the glass band.

**15.** Device according to one of Claims 7 to 14, characterized in that the electrodes (4, 5) are each mounted able to pendulate about an axis (21, 22) integral with the electrode carrier (3).

**16.** Device according to one of Claims 7 to 15, characterized in that each electrode comprises a transverse cavity (31) supplied by a source of plasma-producing gas and leading out opposite the glass band through an opening (37), through which the gas flows perpendicularly to the plane of the glass band or at another inclination, said opening (37) leading from the electrode at the junction between a vertical wall face (32) and a wall face (34) inclined to the plane of the glass band.

**17.** Device according to Claim 16, characterized in that the cavity (31) has a trapezium-shaped cross-section and contains a gas distributor (40).

**18.** Device according to one of Claims 16 to 17, characterized in that the electrode is surrounded by skirts (41) having the same height as the electrode.

**19.** Surface-deionized band or sheet of sodocalcic glass, characterized in that it has, on the side of its treated face and over its entire width, a central surface zone containing no alkaline ions and, possibly also, no alkaline earth ions to a depth which depends upon the intensity of the treatment, evaluated by the coulomb number applied to the glass per unit of area, for a given glass at a determined temperature, and two lateral ion-enriched surface zones.

**20.** Surface-deionized band or sheet of sodocalcic glass, characterized in that it has, on both its treated faces and over its entire width, a central surface zone containing no alkaline ions and, perhaps also, no alkaline earth ions to a depth which depends upon the intensity of the treatment evaluated by the coulomb number applied to the glass per unit of area, for a given glass at a determined temperature, and two lateral ion-enriched surface zones.

**Patentansprüche**

**1.** Verfahren zur Oberflächenentionisierung wenigstens einer Seite eines Bandes oder einer Scheibe aus Alkali-Kalk-Glas, das darin besteht, dieses Band oder diese Scheibe, das/die auf eine Temperatur unterhalb der Erweichungstemperatur des Glases erhitzt worden ist, in einem elektrischen Gleichfeld durchlaufen zu lassen, das zwischen zwischen Elektroden zum Erzeugen einer Koronaentladung aufgebaut wird, die geeignet ist, mit dem Glasband oder der -scheibe eine elektrische Bindung herzustellen**, dadurch gekennzeichnet, daß** das Glasband oder die -scheibe derart durch das elektrische Feld laufen gelassen wird, daß die Ionen in die Tiefe und zu den Seitenbereichen des Glasbandes oder der -scheibe transportiert werden, indem wenigstens eine Anode (4) derart angeordnet wird, daß sie den zentralen Bereich des Glasbandes oder der -scheibe (1) bedeckt, und wenigstens zwei Kathoden (5) derart angeordnet werden, daß sie jeweils einen Seitenbereich des Glasbandes oder der -scheibe (1) bedecken, wobei diese Kathoden zu den benachbarten Enden der Anode (4) in Längs- und Querrichtung versetzt sind.

**2.** Verfahren nach Anspruch 1**, dadurch gekennzeichnet, daß** das elektrische Feld von einem Gleichstrom erzeugt wird, dessen Spannung begrenzt ist und dessen Stärke sich in Abhängigkeit vom Glaswiderstand einstellt.

**3.** Verfahren nach Anspruch 1 oder 2**, dadurch gekennzeichnet, daß** die Spannung auf einen Wert begrenzt ist, der in Abhängigkeit von der gewünschten Behandlungsstärke, die durch die Anzahl der auf das Glas pro Oberflächeneinheit aufgebrachten Coulomb ausgedrückt ist, und in Abhängigkeit vom Glas und dessen Temperatur bestimmt wird.

**4.** Verfahren nach einem der Ansprüche 1 bis 3**, dadurch gekennzeichnet, daß** sich das Glas an der Masse befindet und die Spannung schwankt.

**5.** Verfahren nach einem der Ansprüche 1 bis 4**, dadurch gekennzeichnet, daß** die beiden Seiten des Glasbandes oder der -scheibe praktisch gleichzeitig oder nacheinander behandelt werden.

**6.** Verfahren nach einem der Ansprüche 1 bis 5**, dadurch gekennzeichnet, daß** die Behandlung bei einer Temperatur von unter 400 ° C stattfindet.

**7.** Vorrichtung zur Durchführung des Verfahrens zur Oberflächenentionisierung wenigstens einer Seite eines heißen Bandes oder einer heißen Scheibe (1) aus Alkali-Kalk-Glas, das/die sich relativ zur Vorrichtung bewegt, um es/sie einem elektrischen Feld auszusetzen, das zwischen geraden, parallel zur Ebene des Glasbandes oder der -scheibe stehenden Elektroden zum Erzeugen einer Koronaentladung aufgebaut wird, die geeignet ist, mit dem Glasband oder der -scheibe eine elektrische Bindung herzustellen**, dadurch gekennzeichnet, daß** sie wenigstens eine Anode (4), die derart angeordnet ist, daß sie den zentralen Bereich des Glasbandes oder der -scheibe (1) bedeckt, und wenigstens zwei Kathoden (5) umfaßt, die derart angeordnet sind, daß sie jeweils einen Seitenbereich des Glasbandes oder der -scheibe (1) bedecken, wobei diese Kathoden (5) zu den benachbarten Enden der Anode (4) in Längs- und Querrichtung versetzt sind.

**8.** Vorrichtung nach Anspruch 7**, dadurch gekennzeichnet, daß** die Anode und die beiden Kathoden zur Durchlaufrichtung des Glasbandes senkrecht stehen.

**9.** Verfahren nach Anspruch 8**, dadurch gekennzeichnet, daß** die Anode über der zu behandelnden Seite des Glasbandes angeordnet ist und die Kathoden, die sich hinter oder vor der Anode befinden, unter dem Glasband angeordnet sind.

**10.** Vorrichtung nach Anspruch 7**, dadurch gekennzeichnet, daß** sie vier Kathoden enthält, die zur Durchlaufrichtung des Glasbandes senkrecht stehen und zu je zwei symmetrisch zur Anode angeordnet sind.

**11.** Vorrichtung nach Anspruch 7**, dadurch gekennzeichnet, daß** die Kathoden zur Durchlaufrichtung des Glasbandes geneigt sind.

**12.** Vorrichtung nach Anspruch 7**, dadurch gekennzeichnet, daß** die Anode zur Durchlaufrichtung des Glasbandes geneigt ist und die beiden Kathoden zueinander parallel stehen, wobei die eine hinter und die andere vor der Anode angeordnet ist.

**13.** Vorrichtung nach Anspruch 12**, dadurch gekennzeichnet, daß** die Kathoden parallel zur Anode stehen.

**14.** Vorrichtung nach einem der Ansprüche 7 bis 13**, dadurch gekennzeichnet, daß** die Elektroden an einem Elektrodenträger (3) befestigt und Mittel vorgesehen sind, die den Elektrodenträger um eine Achse (7) drehen, die senkrecht zum Glasband steht.

**15.** Vorrichtung nach einem der Ansprüche 7 bis 14**, dadurch gekennzeichnet, daß** die Elektroden (4, 5) sich jeweils um eine Achse (21, 22) hin- und her bewegend fest mit dem Elektrodenträger (3) verbunden ist.

**16.** Vorrichtung nach einem der Ansprüche 7 bis 15**, dadurch gekennzeichnet, daß** jede Elektrode einen Querhohlraum (31) enthält, der von einer Quelle für plasmabildendes Gas versorgt wird und gegenüber dem Glasband mit einer Öffnung (37) mündet, durch welche das Gas senkrecht zur Ebene des Glasbandes oder entsprechend einer anderen Neigung strömt, wobei diese die Elektrode verlassende Öffnung (37) mit einer zu Ebene das Glasbandes senkrechten (32) und einer dazu geneigten Wand (34) verbunden ist.

**17.** Vorrichtung nach Anspruch 16**, dadurch gekennzeichnet, daß** der Hohlraum (31) einen trapezförmigen Schnitt hat und eine Gasverteilung (40) enthält.

**18.** Vorrichtung nach Anspruch 16 oder 17**, dadurch gekennzeichnet, daß** die Elektrode von Mänteln (41) umgeben ist, welche gleich hoch wie die Elektrode sind.

**19.** Band oder Scheibe aus oberflächenentionisiertem Alkali-Kalk-Glas**, dadurch gekennzeichnet, daß** es/sie auf der behandelten Seite und über die gesamte Breite einen zentralen Oberflächenbereich, der keine Alkali- und gegebenenfalls Erdalkaliionen in einer Tiefe enthält, welche von der Behandlungsstärke abhängt, die durch die Anzahl der pro Oberflächeneinheit auf das Glas aufgebrachten Coulomb ausgedrückt wird, bei einem gegebenen Glas mit einer bestimmten Temperatur, und zwei mit Ionen angereicherte seitliche Oberflächenbereiche aufweist.

**20.** Band oder Scheibe aus oberflächenentionisiertem Alkali-Kalk-Glas**, dadurch gekennzeichnet, daß** es/sie auf den beiden behandelten Seiten und über die gesamte Breite einen zentralen Oberflächenbereich, der keine Alkali- und gegebenenfalls Erdalkaliionen enthält, in einer Tiefe, die von der Behandlungsstärke abhängt, die durch die Anzahl der pro Oberflächeneinheit auf das Glas aufgebrachten Coulomb ausgedrückt wird, bei einem gegebenen Glas mit einer bestimmten Temperatur, und zwei mit Ionen angerei-cherte seitliche Oberflächenbereiche aufweist.

FIG.1

EP 0 452 180 B1

Fig 2

Fig. 4

FIG.3